# EUROPÄISCHE PATENTANMELDUNG

(11) **EP 0 739 864 A1**
(43) Veröffentlichungstag der Anmeldung: **30.10.1996**
(21) Anmeldenummer: 96106234.6
(22) Anmeldetag: 20.04.1996
(51) Int. Cl.: C04B 35/443

(54) **Keramischer Werkstoff sowie Verfahren zu seiner Herstellung**

(30) Priorität: 27.04.1995 DE 19515490
(71) Anmelder: ABB PATENT GmbH, D-68309 Mannheim (DE)
(72) Erfinder: Haar, Wilhelm, Dr., 69207 Sandhausen (DE)
(74) Vertreter: Rupprecht, Klaus, Dipl.-Ing.

(57) **Zusammenfassung**

Die Erfindung umfaßt einen keramischen Werkstoff sowie ein Verfahren zu seiner Herstellung. Der keramische Werkstoff wird aus zwei Metalloxiden bildet, wobei die Metalle dieser Oxide unterschiedliche Wertigkeiten aufweisen. Der Werkstoff weist eine Hauptphase mit Spinellgitter auf. Das Oxid des niederwertigen Metalls ist über das stöchiometrische Verhältnis 1:1 hinaus im Spinellgitter vorhanden und darin gelöst. Es werden Aluminiumoxid und Magnesiumoxid verwendet, Das Molverhältnis von Magnesiumoxid zu Aluminiumoxid liegt in der gesinterten Keramik zwischen 1,01:1 und 1,8:1 bzw. zwischen 1,1:1 und 1,4:1. Für die Herstellung werden α-Al₂O₃ und MgO oder chemische Verbindungen dieser Metalle verwendet, die sich thermisch in diese Oxide umwandeln lassen, wobei die Ausgangswerkstoffe eine Reinheit von > 99,8 Masse% aufweisen. Pulverförmiges α-Al₂O₃ und MgO mit einer Teilchengröße von 0,5 µm bis 2 µm werden in einem Molverhältnis, das die Bildung nur einer einzigen Hauptphase mit einem Spinellgitter gemäß der chemischen Formel (1+x)MgO·Al₂O₃ ermöglicht, durch Mahlen gemischt und auf eine Teilchengröße < 1 µm zerkleinert. Dieses Pulvergemisch wird anschließend zu dem keramischen Werkstoff weiterverarbeitet.

## Beschreibung

Die Erfindung bezieht auf einen keramischen Werkstoff sowie auf ein Verfahren zu dessen Herstellung gemäß dem Oberbegriff der Patentansprüche 1 und 8.

Keramische Werkstoffe dieser Art kommen in der chemischen Industrie, der Metallindustrie und der Keramikindustrie dort zur Anwendung, wo beispielsweise alkalische Medien bei erhöhter Temperatur in gas- und/oder flüssigkeitsdichte Behälter einzuschließen, in gas- und/oder flüssigkeitsdichten Leitungen geführt oder über diese separiert werden müssen. Wegen zu hoher Temperaturen und/oder wegen zusätzlicher korrosiver Angriffe durch Sauerstoff, oxidierende Gase, Halogene oder halogenierende Agentien sind metallische Werkstoffe als Materialien in vielen Fällen hierfür ungeeignet.

Die in solchen Prozessen bis jetzt verwendeten Bauteile in Form von Tiegeln, Schutzrohren, Auskleidungen und Ummantelung, sind aus Aluminiumoxid, Magnesiumoxid, Berylliumoxid, Siliziumcarbid, Siliziumnitrid und Spinell gefertigt. Die Verwendung dieser keramischen Werkstoffe ist jedoch mit gravierenden Nachteilen behaftet. Diese liegen in der mangelnden Beständigkeit gegen Alkalien, der Wasserempfindlichkeit, die das Lagern dieser Bauteile bei Raumtemperatur und das An- und Herunterfahren von Prozessen problematisch macht. Zudem weisen diese Werkstoffe eine mangelnde Phasenreinheit und Dichte auf. Außerdem ist die Herstellung der Ausgangswerkstoffe teilweise teuer.

Der Erfindung liegt deshalb die Aufgabe zugrunde, einen keramischen Werkstoff zu schaffen, bei dem die Nachteile des eingangs genannten Standes der Technik ausgeschlossen sind, sowie ein Verfahren aufzuzeigen, mit dem ein solcher Werkstoff kostengünstig hergestellt werden kann.

Ein keramischen Werkstoff, der diese Aufgabe erfüllt, ist in Patentanspruch 1 offenbart.

Ein Verfahren zur Herstellung eines solchen keramischen Werkstoffs ist in Patentanspruch 8 offenbart.

Der erfindungsgemäße keramische Werkstoff besteht aus einem mit MgO angereicherten Spinell, mit der chemischen Formel (1+x)MgO·Al₂O₃. Die Zusammensetzung des erfindungsgemäßen Werkstoffs wird generell so gewählt, daß sich das überschüssige MgO vollständig im Spinellgitter löst. Bei der bevorzugtesten Zusammensetzung liegt der Wert von x zwischen 0,01 und 0,8. Vorteilhafterer Weise wird für x ein Wert zwischen 0,1 und 0,4 gewählt. Als Rohstoffe kommen α-Al₂O₃ und MgO in Betracht sowie Verbindungen, die sich thermisch in diese Oxide umwandeln lassen. Bei der Herstellung des erfindungsgemäßen keramischen Werkstoffs können zur Bildung der Al₂O₃Komponente die Übergangsoxide gamma-, delta- und theta-Al₂O₃ verwendet werden. Ferner eignen sich hierfür Aluminiumhydroxide, die sich formelmäßig durch den Ausdruck Al₂O₃·m H₂O darstellen lassen. Für m = 1 ergeben sich die Böhmite und für m = 3 die bekannten Trihydrate wie z.B. Gibbsit. Für die Bildung der MgO-Komponente des keramischen Werkstoffs können neben dem bereits erwähnten MgO auch Mg(OH)₂, die Carbonate und die Nitrate dieses Metalls verwendet werden. Um einen keramischen Werkstoff mit den gewünschten Eigenschaften zu erhalten, ist es sehr wesentlich, daß die verwendeten Rohstoffe eine Reinheit aufweisen, die größer ist als 99,8 Masse-%. Der keramische Werkstoff kann unter industriellen Bedingungen ausreichend phasenrein hergestellt werden, so daß die an ihn gestellten Forderungen vollständig erfüllt werden. Weitere wichtige Kriterien sind die Kornfeinheit und der Agglomerationszustand des Rohstoffs. Die Teilchengröße sollte kleiner sein als 1 µm. Sie sollte jedoch in keinem Fall 10 µm überschreiten. Diese Teilchengröße kann durch zusätzliches Mahlen des Materials erreicht werden. Hierfür ist das Trocken- oder Naßmahlen in Trommel-, Vibrations- und Rührwerkskugelmühlen geeignet. Bei den gängigen, noch teilweise agglomerierten Rohstoffen wie z.B. einer α-Tonerde von ALCOA ist es zur Verbesserung der Homogenität erforderlich, eine Rohstoffmischung, die beispielsweise in einer Schwingmühle homogenisiert wird, zunächst bei Temperaturen um 1250°C zu kalzinieren und dann anschließend nochmals zu mahlen. Bei besonders feinteiligen und deagglomerierten Rohstoffen mit mittleren Korngrößen unter 0,5 µm kann auch ein Direktsinterverfahren angewendet werden, bei dem auf den Kalzinationsschritt verzichtet werden kann. Das Molverhältnis zwischen dem aluminiumhaltigen Ausgangswerkstoff und dem magnesiumhaltigen Ausgangswerkstoff wird so gewählt, daß die Molmenge des zu bildenden Magnesiumoxids immer etwas größer ist als die des Aluminiumoxids. Es muß jedoch immer sichergestellt sein, daß die Menge des Magnesiumoxids nur um soviel größer ist, daß das Magnesiumoxid in dem Spinell gelöst bleibt, und als einzige Phase nur der Spinell röntgenographisch zu identifizieren ist.

Ein keramischer Werkstoff mit dieser Zusammensetzung weist den Vorteil auf, daß er wegen seiner hohen Dichte im gesinterten Zustand gasdicht ist und keine offenen Poren besitzt. Gegenüber der bekannten stöchiometrischen Spinellkeramik hat der erfindungsgemäße keramische Werkstoff den Vorteil, daß keine Reste von Korund im Material verbleiben. Solche Rückstände bilden Zentren für den korrosiven Angriff durch Alkalien und verursachen so eine unzureichende Lebensdauer des Materials. Durch die chemischen Eigenschaften seiner Hauptphase wird die Korrosionsbeständigkeit in oxidierenden, alkalischen Medien wesentlich erhöht.

Für die Ausbildung von Formkörpern kommen Verfahren wie isostatisches Pressen, Elektrophorese, Strangpressen und Spritzgießen zur Anwendung. Die Formgebungsverfahren bestimmen den vorgeschalteten Mahl- und ggf. Granulierschritt.

Weitere erfindungswesentliche Merkmale sind in den Unteransprüchen offenbart.

Die Erfindung wird nachfolgend näher erläutert.

Für die Herstellung des erfindungsgemäßen keramischen Werkstoffs werden beispielsweise pulverförmiges Aluminiumoxid mit einer mittleren Korngröße von 1 µm und pulverförmiges Magnesiumoxid mit einer mittleren Korngröße von 1 µm verwendet. Das Molverhältnis zwischen Aluminiumoxid und Magnesiumoxid wird 1:1,18 gewählt. Wesentlich dabei ist, daß die Menge des Magenesiumoxids etwas größer als die des Aluminiumoxids ist. Dabei muß immer sichergestellt sein, daß die Menge des Magnesiumoxids nur so groß gewählt wird, daß das Magnesiumoxid in dem zu bildenden Spinell gelöst ist und als einzige Phase der Spinell röntgenographisch zu identifizieren ist. Die Pulver werden durch Mahlen in einer Schwingmühle gemischt. Das Mahlen dauert etwa 16 Stunden. Die mittlere Korngröße der pulverförmigen Mischung liegt danach unter 1µm. Dieses Pulver wird anschließend 6 Stunden lang bei 1250°C in einem Elektroofen kalziniert. Das kalzinierte Material wird im Anschluß daran während eines erneuten Mahlprozesses zerkleinert, so daß ein Pulver mit einer maximalen Korngröße von 5µm erzeugt wird. Dieses Pulver besteht im wesentlichen aus Spinell. Im Röntgendiffraktogramm sind die Linien des Periklas (MgO) gerade noch zu erkennen. Anschließend wird das Pulver mit Wasser, 2% Dispergiermittel in Form von Polyacrylat, 1% Bindemittel und/oder Plastifizierungmittel in Form von Wachs oder Polydiol zu einem Schlicker mit niedriger Viskosität und einem Feststoffgehalt von 50% bis 70% verrührt. Die %-Angaben für die Zusätze beziehen sich auf die Menge des verwendeten kalzinierten Pulvers. Der Schlicker wird in einem Sprühtrockner zu einem rieselfähigen Granulat mit einem Teilchendurchmesser von 30µm bis 250µm verarbeitet. Aus diesem Granulat können Formkörper beliebiger Geometrie und Größe sowie Auskleidungen oder Ummatelungen hergestellt werden. Diese weisen alle die Eigenschaft auf, daß sie gegenüber oxidierenden, alkalischen Medien sehr korrosionsbeständig sind. Aus dem Granulat kann beispielsweise durch isostatisches Pressen mit einem Preßdruck von 200MPa ein einseitig geschlossenes Rohr geformt werden. Dieser keramische Grünling wird bei einer Temperatur von 1700°C 0,5 Stunden lang gesintert. Der keramische Werkstoff des fertigen Rohres weist nur eine Phase mit Spinellstruktur auf. Die Dichte des Materials liegt bei 3,55 g/cm³. Die Heliumleckrate des Rohres ist kleiner als 10⁻⁹ mbar·l·s⁻¹. Ein solches Rohr kann beispielsweise als Hüllrohr zum Sintern von (Na)β''-Aluminiumoxidkeramik oder als Schutzrohr für die Heizelemente eines Schmelzofens für Filterstäube verwendet werden. Rohre aus dem erfindungsgemäßen keramischen Werkstoff weisen auch nach langer Zeit unter der Einwirkung von korrosiven Gasen und Temperaturen von 1650°C keinerlei Anzeichen von Korrosion auf.

Der erfindungsgemäße keramische Werkstoff kann auch aus einem pulverförmigen Mg(OH)₂ und einem pulverförmigem theta-Al₂O₃ hergestellt werden. Das theta-Al₂O₃ wird aus einem Böhmit während eines Glühprozesses gewonnen. Das Molverhältnis zwischen dem theta-Al₂O₃ und dem Mg(OH)₂ wird so gewählt, daß sich ein Molverhältnis zwischen Aluminiumoxid zu Magnesiumoxid von 1: 1,36 einstellt. Auch hierbei ist der molare Anteil des theta-Al₂O₃ kleiner als der des Mg(OH)₂. Die beiden Pulver werden in einer wässrigen Emulsion mit einem Feststoffanteil von 45% zusammen mit 2% Dispergiermittel in Form von Polyacrylat oder Triäthanolamin bezogen auf die Menge des Pulvergemischs in einer Rührwerksmühle so gemahlen, daß sich eine mittlere Korngröße von 0,3 µm und eine maximale Korngröße von 2,5 µm einstellt. Anschließend wird dieses Gemisch mit 1,5% eines löslichen Binders auf der Basis eines Polyvinylalkohols oder in Form von Polydiol bezogen auf die Menge des Pulvergemischs versetzt, und in einem Zerstäubungstrockner zu einem gut rieselfähigen Granulat sprühgetrocknet. Dieses Granulat kann ebenfalls für die Herstellung von Formkörpern beliebiger Größe und Geometrie verwendet werden. Das gleiche gilt für die Ausbildung von Auskleidungen und Ummantelungen. Soll bespielsweise ein Rohr hergestellt werden, so wird das Granulat mittels einer Isostatpresse zu einem solchen Formkörper verpreßt, und anschließend 2 Stunden bei 1680°C dichtgebrannt. Das fertige Rohr weist eine Dichte von 3,53 g/cm³ auf. Es hat ein Gefüge mit einer mittleren Korngröße von 3 µm und eine Heliumleckrate, die kleiner als 10⁻⁹ mbar·l·s⁻¹ ist. Das Rohr zeigt auch unter Betriebsbedingungen, bei denen es über längere Zeit den Einwirkungen von korrosivem Na₂O-Dampf ausgesetzt ist, keine Spuren einer Alterung.

Die fertigen Formkörper, Auskleidungen und Ummantelungen weisen keine offenen Poren auf. Falls es jedoch erforderlich sein sollte, kann durch den Zusatz von Porenbildnern in Form von Ammoniumchlorid oder Kunststoffgranulat eine Porosität definierter Größe ausgebildet werden. Das gilt für alle angewendeten Herstellungsverfahren.

Die Einsatzmöglichkeiten des erfindungsgemäßen keramischen Werkstoffs sind nicht auf die oben beschriebenen Anwendungen beschränkt. Vielmehr umfaßt das Anwendungsgebiet die Herstellung von Formkörpern beliebiger Geometrie und Größe für alle Bereiche der Industrie, in denen korrosive Medien bei erhöhter Temperatur in gas- und/oder flüssigkeitsdichte Behälter zu füllen oder in gas- und/oder flüssigkeitsdichten Leitungen zu führen sind oder über diese separiert werden sollen.

## Patentansprüche

1. Keramischer Werkstoff aus wenigstens zwei Metalloxiden, wobei die Metalle unterschiedliche Wertigkeiten aufweisen, gekennzeichnet durch einen Spinell als Hauptphase, wobei das Oxid des niederwertigen Metalls über das stöchiometrische Verhältnis 1:1 hinaus im Spinellgitter vorhanden und darin gelöst ist.

2. Keramischer Werkstoff nach Anspruch 1, dadurch gekennzeichnet, daß der metallische Anteil des ersten Oxids ein chemisches Element der 2. Hauptgruppe und der metallische Anteil des zweiten Oxids ein chemisches Element der 3. Hauptgruppe des chemischen Periodensystems ist, und daß das Oxid des Metalls der 2. Hauptgruppe über das stöchiometrische Verhältnis 1:1 hinaus im Spinellgitter vorhanden und darin gelöst ist.

3. Keramischer Werkstoff nach einem der Ansprüche 1 oder 2, dadurch gekennzeichnet, daß der metallische Anteil des ersten Oxids Magnesium und der metallische Anteil des zweiten Oxids Aluminium ist.

4. Keramischer Werkstoff nach einem der Ansprüche 1 bis 3, dadurch gekennzeichnet, daß das Magnesiumoxid im Verhältnis zum Aluminiumoxid über das stöchiometrische Molverhältnis 1:1 hinaus im Spinellgitter vorhanden und darin gelöst ist.

5. Keramischer Werkstoff nach einem der Ansprüche 1 bis 4, dadurch gekennzeichnet, daß das Molverhältnis von Magnesiumoxid zu Aluminiumoxid in der gesinterten Keramik zwischen 1,01:1 und 1,8:1 liegt.

6. Keramischer Werkstoff nach einem der Ansprüche 1 bis 4, dadurch gekennzeichnet, daß das Molverhältnis von Magnesiumoxid zu Aluminiumoxid in der gesinterten Keramik zwischen 1,1:1 und 1,4:1 liegt.

7. Keramischer Werkstoff nach einem der Ansprüche 1 bis 6, gekennzeichnet, durch einen Spinell mit der chemischen Formel (1+x)MgO·Al₂O₃, wobei x einen Wert zwischen 0,01 und 0,8, vorzugsweise einen Wert zwischen 0,1 und 0,4 aufweist.

8. Verfahren zur Herstellung eines keramischen Werkstoffs aus wenigstens zwei Metalloxiden, dadurch gekennzeichnet, daß für die Herstellung α-Al₂O₃ und MgO oder chemische Verbindungen dieser Metalle verwendet werden, die sich thermisch in diese Oxide umwandeln lassen, und daß die Ausgangswerkstoffe eine Reinheit von > 99,8 Masse% aufweisen.

9. Verfahren zur Herstellung eines keramischen Werkstoffs nach Anspruch 8, dadurch gekennzeichnet, daß für die Herstellung der Al₂O₃ Komponente die Übergangsoxide gamma-, delta- und theta-Al₂O₃, Aluminiumhydroxide in Form von Al₂O₃·m H₂O verwendet werden, wobei m einen Wert zwischen 1 und 3 aufweisen kann, daß für die Bildung der MgO-Komponente MgO, Mg(OH)₂ bzw. Carbonate oder Nitrate von Magnesium verwendet werden, und daß die Ausgangswerkstoffe eine Reinheit > 99,8 Masse% aufweisen.

10. Verfahren zur Herstellung eines keramischen Werkstoffs nach einem der Ansprüche 8 oder 9, dadurch gekennzeichnet, daß pulverförmiges α-Al₂O₃ und MgO mit einer Teilchengröße von 0,5 µm bis 2 µm in einem Molverhältnis, das die Bildung einer einzigen Hauptphase mit einer Spinellstruktur mit der chemischen Formel (1+x)MgO·Al₂O₃ ermöglicht, durch Mahlen gemischt und auf eine Teilchengröße < 1 µm zerkleinert werden, daß dieses Pulvergemisch anschließend 1 bis 10 Stunden lang bei 1200°C bis 1380°C kalziniert und das kalzinierte Material zur Fertigstellung des keramischen Werkstoffs daraufhin auf eine Teilchengröße zwischen 1 µm und 7 µm zerkleinert wird.

11. Verfahren zur Herstellung eines keramischen Werkstoffs nach Anspruch 10, dadurch gekennzeichnet, daß aus dem kalzinierten, pulverförmigen keramischen Werkstoff und Wasser ein Schlicker mit niedriger Viskosität gebildet wird, der als Zusätze Dispergiermittel, Bindemittel und/oder Plastifizierungsmittel enthält, daß aus dem Schlicker ein Granulat mit einem Teilchendruchmesser von 30 µm bis 250µm gebildet und durch isostatisches Pressen zu einem Formkörper weiterverarbeitet oder zur Auskleidung bzw. Ummantelung von Bauteilen verwendet wird.

12. Verfahren zur Herstellung eines keramischen Werkstoffs nach Anspruch 11, dadurch gekennzeichnet, daß dem kalzinierten, pulverförmigen Werkstoff mit einer Teilchengröße von < 5 µm 40% bis 140% Wasser bezogen auf die gesamte Menge des Pulvers zur Bildung des Schlickers zugesetzt wird, daß dem Schlicker 2% Dispergiermittel in Form von Polyacrylaten sowie 1% Wachs oder Polydiole als Binde- und/oder Plastifizierungsmittel bezogen auf die gesamte Menge des keramischen Werkstoffs beigemischt werden, und daß aus dem Schlicker durch Sprühtrocken das Granulat gebildet wird, das bei einem Druck von 100 bis 300 MPa zu einem Formkörper verpreßt wird, der anschließend bei einer Temperatur zwischen 1650°C und 1720°C zu seiner Fertigstellung 1 bis 5 Stunden lang gesintert wird.

13. Verfahren zur Herstellung eines keramischen Werkstoffs nach einem der Ansprüche 8 oder 9, dadurch gekennzeichnet, daß pulverförmiges, durch Glühen von Böhmit gewonnenes theta-Al₂O₃ und Mg(OH)₂ in solchen Mengen verwendet werden, daß sich zwischen dem Aluminiumoxid und dem Magnesiumoxid ein solches Molverhältnis einstellt, das die Bildung einer einzigen Hauptphase mit einer Spinellstruktur mit der chemischen Formel (1+x)MgO·Al₂O₃ ermöglicht, daß aus dem pulverförmigen Gemisch aus Aluminiumoxid und Magnesiumoxid mit einer Teilchengröße zwischen 0,3 µm und 1,5 µm eine Emulsion unter Zusatz von 30% bis 70% Wasser, bezogen auf die gesamte Menge der Emulsion, gebildet wird, daß der Emulsion 1% bis 4% eines Dispergiermittels bezogen auf die Menge des verwendeten keramischen Werkstoffs beigemischt wird, daß die Emulsion gemahlen und der keramische Werkstoff dabei auf eine mittlere Teilchengröße zwischen 0,1 µm und 0,4 µm zerkleinert wird, daß die Emulsion anschließend mit 0,5% bis 4% eines löslichen Binders bezogen auf die Gesamtmenge der Emulsion vermischt und daraufhin zu einem rieselfähigen Granulat verarbeitet und anschließend zu Formkörpern, Ummantelungen und Auskleidungen weiterverarbeitet wird.

14. Verfahren zur Herstellung eines keramischen Werkstoffs nach Anspruch 13, dadurch gekennzeichnet, daß als Dispergiermittel Polyacrylat oder Triäthanolamin und als Binder Polyvinylalkohol oder Polydiol verwendet werden.
